(19) **Europäisches Patentamt**
**European Patent Office**
**Office européen des brevets**

(11) **EP 3 118 751 A1**

(12) **DEMANDE DE BREVET EUROPEEN**

(43) Date de publication:
**18.01.2017 Bulletin 2017/03**

(51) Int Cl.:
**G06F 17/21** (2006.01)          **G06F 17/27** (2006.01)
**G06F 17/30** (2006.01)          **G06Q 30/02** (2012.01)

(21) Numéro de dépôt: **16179355.9**

(22) Date de dépôt: **13.07.2016**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **13.07.2015 FR 1556658**

(71) Demandeurs:
• **Pixalione**
  **92100 Boulogne (FR)**

• **Université Paris 13**
  **93430 Villetaneuse (FR)**

(72) Inventeurs:
• **Firoozeh, Nazanin**
  **92100 Boulogne-Billancourt (FR)**
• **Nazarenko, Adeline**
  **92600 Asnières-sur-Seine (FR)**
• **Alizon, Fabrice**
  **75015 Paris (FR)**

(74) Mandataire: **Vidon Brevets & Stratégie**
  **16B, rue de Jouanet**
  **B.P. 90333**
  **Technopole Atalante**
  **35703 Rennes Cedex 7 (FR)**

(54) **PROCÉDÉ D'EXTRACTION DE MOTS CLÉS, DISPOSITIF ET PROGRAMME D'ORDINATEUR CORRESPONDANT**

(57)    L'invention se rapporte à un procédé et à un dispositif d'extraction de mots clés d'un contenu textuel. Un procédé d'extraction de mots clés d'un contenu textuel selon l'invention comprend les étapes suivantes :
- obtention d'un contenu textuel à l'aide d'un module d'extraction textuel (TEM) ;
- formatage du contenu textuel en fonction d'au moins un délimiteur, délivrant un contenu délimité comprenant un ensemble de phrases ;
- lemmatisation de chaque phrase dudit contenu délimité délivrant un contenu lemmatisé ;
- identification, au sein dudit contenu lemmatisé, d'un ensemble de mots uniques, délivrant une liste de mots candidats ;
- regroupement des mots uniques de la liste des mots candidats délivrant une liste de mots clés.

Figure 1

**Description**

**1. Domaine**

La technique proposée se rapporte au domaine des traitements d'optimisation de données. La technique proposée se rapporte plus particulièrement aux traitements d'optimisation d'indexation de contenus mis à disposition au sein des réseaux de communication. La technique proposée se rapporte encore plus spécifiquement à l'optimisation de l'indexation de contenus par des moteurs de recherche. La technique proposée se rapporte également à un outil pour l'extraction de mots clés commerciaux à partir de contenus afin de permettre une identification de ce contenu.

**2. Art Antérieur**

Pour d'atteindre plus de clients que leurs concurrents, les entreprises commercialisant des biens et des services utilisent différentes méthodes commerciales classiques et modernes allant de la publicité à des programmes de fidélisation de clientèle. De telles méthodes sont désormais majoritairement mises en oeuvre par l'intermédiaire de sites et d'applications dont le socle de base est Internet. Ainsi, disposer d'un site Internet ou d'une application qui représente l'entreprise et décrit ses services et activités est nécessaire. Il est cependant indispensable que ce site et/ou cette application soit visibles.

Il est indéniable que les moteurs de recherche jouent un rôle de prépondérant dans la manière dont les personnes accèdent à l'information depuis un navigateur internet ou depuis un smartphone ou une tablette. Avant même l'accès réel à un site internet ou à un contenu, un moteur de recherche intervient généralement pour fournir un certain nombre de résultats de recherche à un utilisateur. Cet utilisateur, au préalable, a transmis une requête au moteur de recherche (requête textuelle ou requête vocale). Le moteur de recherche analyse cette requête et fournit des résultats en fonction des mots clés de cette requête.

Ainsi, les résultats des moteurs de recherche sont la principale source de visites d'un site. Dès lors, pour que les résultats de recherche soient adaptés au désir de visibilité d'une entreprise, il est fréquent de faire appel à des experts en indexation. Ces experts aident les gestionnaires de sites web à optimiser leurs apparitions dans les résultats des moteurs de recherche. Ces tâches sont des tâches d'optimisation du référencement. L'une des tâches mise en oeuvre consiste à extraire des mots clés des contenus et à utiliser ces mots clés pour remplir des balises spécifiques du contenu afin que celui-ci soit référencé de manière optimale.

Il existe différentes approches de l'extraction de mots clés. Certaines approches utilisent des résultats de fonctions *statistiques* de termes dans le contenu tandis que d'autres bénéficient de caractéristiques linguistiques des termes en fonction de la langue utilisée. Certaines approches sont entièrement automatiques et utilisent essentiellement des techniques d'apprentissage machine, basées sur des algorithmes d'intelligence artificielle. Toutefois, certains autres sont semi-automatiques.

Considérer l'extraction de mots-clés comme un problème de classification supervisée et comme un problème d'application de techniques d'apprentissage machine permet effectivement d'améliorer les approches automatiques. Cependant, ces techniques d'apprentissage basées sur un classifieur nécessitent la génération d'un ensemble de données de départ. Les données de départ sont celles qui permettent au module d'apprentissage supervisé d'extraire et de définir des mots clés efficaces. Or générer des données de départ, efficaces pour la formation du classificateur n'est pas une tâche triviale et doit être fait manuellement. En effet, une génération automatique de données de départ à destination du classifieur ne permet pas d'obtenir un ensemble de données de départ suffisamment efficace. Ainsi, dans ces techniques existantes, on transforme la tâche manuelle d'extraction de mots clés en une tache manuelle de détermination d'un ensemble de mots clés de départ : ces deux tâches sont toutes aussi complexes et chronophages l'une que l'autre.

Par ailleurs, les approches existantes sont limitées, en termes d'efficacité, tant par la quantité de contenus à référencer et à indexer que par les différents domaines qu'il faut prendre en compte. En effet, il est clair, par exemple pour l'approche automatique à base d'apprentissage supervisé, que l'ensemble de données de départ n'est pas le même pour l'extraction de mots clés se rapportant à des téléviseurs et pour l'extraction de mots clés se rapportant à des produits de beauté.

Dès lors, il est nécessaire de disposer d'une méthode qui permet tout à la fois d'effectuer une extraction de mots clés de manière efficace et rapide tout en assurant un référencement de qualité auprès des moteurs de recherche.

**3. Résumé**

La technique proposée permet de résoudre au moins certains problèmes préalablement évoqués. Plus particulièrement, la technique proposée permet d'extraire, de manière simple et rapide, un ensemble de mots clés à partir d'un ensemble donné de contenus textuels. La technique proposée se rapporte à un procédé, mis en oeuvre par l'intermédiaire d'un dispositif électronique, d'extraction de mots clés.

L'invention porte spécifiquement sur un Procédé d'extraction de mots clés d'un contenu textuel procédé mis en oeuvre par l'intermédiaire d'un dispositif électronique d'extraction comprenant au moins un module d'extraction de mots clés.

Le procédé est caractérisé en ce qu'il comprend les étapes suivantes :

- obtention d'un contenu textuel à l'aide d'un module d'extraction textuel ;
- formatage du contenu textuel en fonction d'un ensemble de délimiteurs, délivrant un contenu délimité comprenant un ensemble de phrases ;
- lemmatisation de chaque phrase dudit contenu délimité délivrant un contenu lemmatisé ;
- identification, au sein dudit contenu lemmatisé, d'un ensemble de mots uniques, délivrant une liste de mots candidats ;
- regroupement des mots uniques de la liste des mots candidats délivrant une liste de mots clés.

Selon une caractéristique particulière, l'étape d'obtention d'un contenu textuel à l'aide d'un module d'extraction textuel comprend :

- une étape de récupération d'un code source HTML en provenance d'un contenu HTML accessible à partir d'une adresse de localisation uniforme, délivrant un contenu HTML allégé au sein duquel un ensemble de balises prédéterminées a été supprimé ;
- une étape d'extraction de contenu, à partir dudit contenu HTML allégé, délivrant un contenu à nettoyer, lequel contenu à nettoyer est obtenu en extrayant du contenu dans les trois balises « corps » et « titre » et « meta descrption » ;
- une étape de nettoyage dudit contenu à nettoyer en fonction d'une liste de termes de commerce électronique et d'une liste de mots d'arrêt, délivrant un contenu textuel à formater.

Selon une caractéristique particulière, ladite étape de lemmatisationest suivie d'une étape de normalisation desdits mots dudit contenu et une étape de conversion desdits mots dudit contenu.

Selon une caractéristique particulière, l'étape d'identification, au sein dudit contenu lemmatisé, d'un ensemble de mots uniques, délivrant une liste de mots candidats comprend :

- une étape de normalisation du contenu lemmatisé, comprenant une étape de nettoyage des mots et une étape de suppression de doublons, délivrant un ensemble de mots uniques ;
- une étape de sélection, parmi les verbes dudit contenu textuel, d'un ensemble de verbes à conserver, en fonction d'un dictionnaire de verbe à conserver, ledit ensemble de verbes à conserver étant ajouté audit ensemble de mots uniques ;
- une étape de génération, pour chaque mot unique de l'ensemble des mots unique, d'un vecteur caractéristique ;
- une étape de calcul, pour chaque mot unique de l'ensemble des mots unique, d'un score représentatif dudit vecteur caractéristique ;
- une étape de sélection, parmi ledit ensemble de mots uniques, d'un sous ensemble de mots unique présentant les scores les plus élevés, ce sous ensemble de mots uniques constituant la liste des mots candidats.

Selon une caractéristique particulière, que ladite étape de génération d'un vecteur caractéristique d'un mot unique courant dudit ensemble de mots uniques tient compte de la fréquence d'apparition dudit mot unique courant dans un journal de requête.

Selon une caractéristique particulière, l'étape de regroupement des mots uniques de la liste des mots candidats délivrant une liste de mots clés comprend :

- une étape de recherche, au sein de la liste des mots candidats, de mots adjacents, un mot courant étant considéré comme adjacent à un mot suivant lorsque l'ensemble constitué du mot courant et du mot suivant apparaît au moins deux fois dans ledit contenu textuel ou une seule fois dans le titre, ladite étape délivrant une liste de mots candidats dans laquelle le mot adjacent constitué du mot courant et du mot suivant est ajouté ;
- une étape de recherche, au sein de la liste des mots candidats, de mots voisins, un mot courant étant considéré comme voisin d'un mot suivant lorsqu'ils apparaissent au moins deux fois dans le contenu textuel tous les deux séparés consécutivement d'au plus deux autres mots qui ne sont pas des mots d'arrêt, ladite étape délivrant une liste de mots candidats dans laquelle le mot voisin constitué du mot courant et du mot suivant est ajouté ;
- une étape de filtrage des mots de ladite liste des mots candidats, comprenant une étape de suppression de mots candidats en fonction de paramètres de suppression prédéterminés, délivrant une liste de mots clés.

Dans une autre implémentation, il est également proposé un dispositif électronique d'extraction de mots clés d'un contenu textuel comprenant au moins un module d'extraction de mots clés. Un tel dispositif comprend les modules suivants, qui peuvent être matériels ou logiciels :

- obtention d'un contenu textuel à l'aide d'un module d'extraction textuel ;
- formatage du contenu textuel en fonction d'au moins un délimiteur, délivrant un contenu délimité comprenant un ensemble de phrases ;
- lemmatisation de chaque phrase dudit contenu délimité délivrant un contenu lemmatisé ;
- identification, au sein dudit contenu lemmatisé, d'un ensemble de mots uniques, délivrant une liste de mots candidats ;
- regroupement des mots uniques de la liste des mots candidats délivrant une liste de mots clés.

Selon une implémentation préférée, les différentes étapes des procédés selon la technique proposée sont mises en oeuvre par un ou plusieurs logiciels ou programmes d'ordinateur, comprenant des instructions logicielles destinées à être exécutées par un processeur de données d'un module relais selon la technique proposée et étant conçu pour commander l'exécution des différentes étapes des procédés.

En conséquence, la technique proposée vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La technique proposée vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon la technique proposée peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, la technique proposée est mise en oeuvre au moyen de composants logiciels et/ou matériels. Dans cette optique, le terme « module » peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en oeuvre ses propres modules logiciels. Les différents modes de réalisation mentionnés ci-dessus sont combinables entre eux pour la mise en oeuvre de la technique proposée.

## 4. Dessins

D'autres caractéristiques et avantages de la technique proposée apparaîtront plus clairement à la lecture de la description suivante d'un mode de réalisation préférentiel, donné à titre de simple exemple illustratif et non limitatif, et des dessins annexés, parmi lesquels :

- la figure 1 présente un synoptique de la technique proposée ;

- la figure 2 détaille l'extraction de textes ;
- la figure 3 détaille l'obtention de mots clés ;
- la figure 4 présente un exemple de traitement mis en oeuvre sur ces mots clés ;
- la figure 5 décrit de manière succincte un dispositif de traitement.

## 5. Description

### 5.1. Principe général

Le principe général de la technique proposée consiste à diviser les traitements réalisés sur des contenus, et plus particulièrement sur des contenus textuels. Plus particulièrement, partant d'un texte, on applique une méthode visant d'une part à rendre ce texte homogène, en termes de formatage et de forme de contenu. Sur la base de ce formatage et de cette forme de contenu, on applique ensuite une méthode d'extraction de mots clés. Dans le mode de réalisation développé ci-après, cette extraction de mots clés est destinée à un usage commercial. Il est entendu, comme cela est explicité ci-après, que cette extraction peut être faite avec d'autres objectifs (par exemple extraction de mots clés à destination d'un usage littéraire). Une fois les mots clés extraits, on applique alors une méthode visant traiter ces mots clés pour remplir un objectif particulier. Dans le mode de réalisation présenté, le traitement des mots clés est effectué afin de définir un titre commercial pour le contenu. Plus particulièrement, dans le mode de réalisation présenté, on cherche à définir un titre de référencement du contenu, titre qui est composé de mots clés. D'autres modes de réalisation et d'autres traitements sont bien entendu envisageables.

La technique proposée est indépendante du domaine et de la langue. De surcroit, cette technique est automatique : elle ne nécessite pas de supervision. Elle bénéficie des caractéristiques statistiques et linguistiques des termes dans un texte donné. L'approche proposée, par ailleurs, ne nécessite pas d'apprentissage machine et donc il n'a pas nécessaire de disposer d'un ensemble de données de départ.

Plus précisément, dans un mode de réalisation, le dispositif identifie les mots les plus pertinents du contenu pour des campagnes commerciales et génère un titre unique pour chaque contenu.

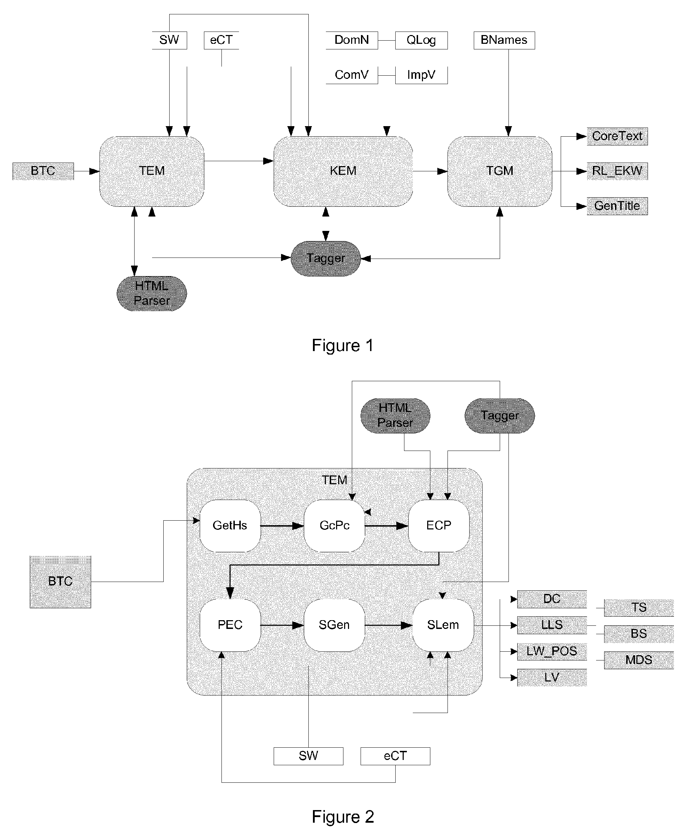

Dans un mode de réalisation, présenté en relation avec la figure 1, le dispositif mis en oeuvre comprend trois modules : module d'extraction du texte (TEM), module d'extraction de mots-clés (KEM), et module de traitement (TGM). Le contenu textuel de base (BTC) est extrait en utilisant le module d'extraction de texte (TEM). À partir du texte extrait, des mots-clés (KW) sont ensuite identifiés à travers le module d'extraction des mots-clés (KEM). Dans la dernière phase, les mots clés (KW) subissent un traitement à partir du module de traitement (TGM). Comme explicité par la suite, le traitement peut consister en la génération d'un titre particulier (GenTitle) pour le contenu. Cette mise en oeuvre selon les modules exposés n'est cependant pas obligatoire et d'autres modes de réalisation peuvent également être proposés.

Dans la suite, on présente un mode de réalisation de la technique présentée précédemment. Il est entendu que ce mode de réalisation n'est nullement limitatif. Par exemple, dans la suite, l'extraction textuelle est réalisée, par le module idoine (TEM), sur des fichiers HTML. Il est bien entendu qu'un tel module peut être adapté à tout type de contenu textuel ou non, en vue de l'obtention de texte, texte qui est traité par la suite par le module d'extraction de mots clés (KEM). Ainsi, il est possible de disposer d'un module d'extraction textuel qui prend en entrée des fichiers texte (plutôt que HTML) ou encore des fichiers en provenance de logiciels de traitement de texte ou encore des structures de données (par exemple des bases de données ou des fichiers XML) contenant des textes. Il est fréquent en effet, que les services de commercialisation de bien et de services créent des pages dites dynamiques et qu'il ne soit pas possible d'extraire directement, à partir des pages HTML. L'extraction est alors réalisée directement dans la base de données, dans laquelle le contenu de la page (i.e. le texte surlequel on souhaite se baser) est présent. Dans ce cas, par exemple, l'extraction textuelle peut consister uniquement en une génération et une lemmatisation de phrases. Dans d'autres modes de réalisation, le contenu textuel est issu d'une reconnaissance de caractères ou d'une reconnaissance de la parole. La technique proposée est alors par exemple utilisé pour définir les mots clés d'un discours. On précise à toute fin utile qu'une phrase, dans le contexte de la technique proposée, est un ensemble de mots. Il ne s'agit pas nécessairement d'une phrase comprenant un sujet, un verbe et un complément. Il peut également s'agir d'un ensemble comprenant une pluralité de mots (par exemple « train électrique rouge » ou encore « lecteur dvd usb »).

De même, on présente par la suite un module de génération de titre dont l'objectif est de remplir une balise de titre d'une page HTML. Il est également entendu qu'un tel module peut être mis en oeuvre pour remplir tout autre type de structure de données, tel que des champs de base de données. Par ailleurs, la mise en oeuvre du module de génération de titre qui est présentée ci-après est destiné à un certain type de titre. D'autres implémentations peuvent être envisagées en prenant en compte d'autres contraintes.

### 5.2. Mode de réalisation

Dans ce mode de réalisation, l'objectif principal est d'extraire des mots clés à partir d'un ensemble donné de pages Web. Pour atteindre cet objectif, le dispositif (ou le système) extrait un premier contenu de la page donnée à partir du code source HTML correspondant. Cependant, toutes les parties du code HTML ne sont pas pertinentes et/ou intéressantes. Par conséquent, le dispositif ne conserve que la partie intéressante de la page. Par la suite, des mots sont extraits du texte. En utilisant l'approche décrite, le dispositif sélectionne les mots significatifs parmi les mots extraits, fusionne les mots significatifs et génère de nouvelles combinaisons de mots qui sont appelés mots-clés.

### 5.2.1. Module d'extraction textuel

Dans ce mode de réalisation, on dispose, préalablement au traitement d'extraction de mots clés, par le module d'extraction de mot clés, d'un module d'extraction textuel, lequel est décrit en relation avec la figure 2. Dans ce mode de réalisation, le module d'extraction textuel (TEM) est conformé pour exécuter une extraction textuelle sur la base de contenus HTML (BTC). Les étapes du procédé d'extraction textuel de ce module TEM sont mises en oeuvre par des sous modules (qui sont soit des sous modules matériels ou des sous modules logiciels). Récupération du code source HTML (GetHs). Le module obtient une URL et effectue un prétraitement de celle-ci. L'objectif de l'étape de prétraitement est de veiller à ce qu'une URL soit dans un format approprié pour récupérer le code source HTML correspondant. En effet, certaines parties d'un code source HTML sont inutiles. Il y a quelques balises qui contiennent du contenu qui est soit sans intérêt du point de vue de la commercialisation ou n'est pas spécifique à la page étudiée : il s'agit par exemple du contenu se rapportant à l'ensemble du site Web. Les pieds de page et les menus sont des exemples de contenu non nécessaire. Le module GetHs, fournit donc un code source HTML nettoyé : les balises HTML supprimées sont par exemple les balises *« Footer, Input, Label, Option, Script, Noscript display : none, visibility : hidden, Style, Menu,* balises *de lien spécifique <a> ».*

La condition pour supprimer une balise de lien est d'effectuer une vérification de la présence de caractères autour de la balise. Lorsque la balise n'est pas entourée de caractères (à droite ou à gauche), on considère que cette balise n'apporte aucun élément supplémentaire et elle est supprimée. Accessoirement, cette phase de prétraitement est également en mesure de repérer les éléments HTML mal formés, bien que cela ne soit pas son objectif premier. Le code source HTML nettoyé est ensuite fournit au module d'extraction de contenu.

Extraction du contenu de la page (GCPC, ECP, PEC). À partir du code source HTML nettoyé, le module récupère le contenu du corps, le titre et les balises de méta description existantes. On se concentre sur ces trois éléments car ils couvrent tout le contenu de la page. Cependant, on évite d'utiliser la méta-description se rapportant aux mots clés afin que la génération de mots clés ne soit pas biaisée par la présence de mots clés existants.

On réalise successivement une récupération du coeur du code HTML (module GCPC) ; lorsque le coeur de ce module est récupéré ; il est transmis au module d'extraction de contenu de la page (ECP), qui extrait le corps (« body »), le titre et la méta description de la page. Ces éléments (corps, titre, meta descrption) font ensuite l'objet d'un traitement de nettoyage (PEC), décrit ci-après. Ce traitement de nettoyage utilise les termes de e-commerce (eCT) et des mots d'arrêt (SW) en fonction des besoins.

Ces traitements, dans ce mode de réalisation, est mise en oeuvre à l'aide d'un *HTML Parser :* il s'agit d'une librairie java permettant l'analyse et la manipulation des parties d'un document HTML, y compris les balises côté serveur. Toute autre librairie de ce type peut également être mise en oeuvre. On utilise également, un module de lemmatisation (Tagger).

À partir du contenu extrait, on met en oeuvre la méthode suivante :

- retrait des adresses e-mail et des URL dans le contenu extrait ;
- remplacement des puces HTML par des symboles appropriés. Les symboles inutiles sont ensuite retirés du texte. Les délimiteurs permettant de délimiter les phrases du texte sont considérés comme des symboles utiles. Les autres symboles sont supprimés.
- certaines pages Web de commerce électronique contiennent à la fois une description courte et une description complète d'un produit. Dans ce cas, une page web peut contenir un contenu en double. Lorsqu'une telle situation se produit, la description courte est supprimée du texte.

A l'issue de la mise en oeuvre de ce module, on obtient donc un contenu textuel qui peut être utilisé comme source textuelle afin de générer des phrases.

Génération de phrases (SGen). Comme explicité en relation avec la description du principe général, l'une des caractéristiques importantes est la transformation en phrases. En effet, en utilisant les phrases présentes dans le texte, les mots candidats peuvent être contextualisés, ce qui apporte une valeur significative à la détermination des futurs mots clés. Cela conduit à l'élimination des erreurs triviales et permet de réduire le temps d'exécution. Pour atteindre cet objectif, le contenu est découpé en utilisant les séparateurs naturels du texte :

| . | : | , | ! | ... | ... | ? | ; | ( | ) | [ | ] | { | } | < | > | « | » |
|---|---|---|---|---|---|---|---|---|---|---|---|---|---|---|---|---|---|

Par ailleurs, en fonction de la langue détectée ou d'un paramétrage adéquat, un traitement particulier est appliqué sur les chiffres et nombres afin que ceux-ci ne soient pas utilisés afin de former des phrases. Par exemple, le nombre 10, 000 (écrit au format US sera remplacé ou identifié comme étant le nombre 10000 et on ne considèrera pas qu'il y a deux phrases différentes).

Lemmatisation de phrases et génération des mots candidats (Slem). Afin de faire une analyse précise sur les différents mots du texte, les phrases sont lemmatisées. Pour ce faire, chaque phrase est d'abord transformée en une suite de mots simples. En utilisant un tagueur idoine, les mots simples sont ensuite répartis et classés en trois ensembles différents en fonction de leur catégorie grammaticale (de l'anglais pour « part of speech » (POS)).

(a) liste de tous les mots dans le texte : en utilisant cet ensemble, on lemmatise les phrases ;Après lemmatisation, les phrases sont normalisées et passées en minuscules; certaines phrases contiennent des mots d'arrêt *(stopwords)* et des termes e-commerce : si la phrase *dans son ensemble* correspond à un terme « d'e-commerce », l'ensemble de la phrase est retiré.

(b) liste de tous les verbes dans le texte : cette liste est utilisée comme une entrée pour l'étape de génération de mots-clés dans le module d'extraction de mots clés.

(c) liste de tous les mots avec les étiquettes de POS suivants : nombre, nom, nom propre, adjectif, Interjection, et Abréviation. Cet ensemble est utilisé comme une entrée pour une seule étape de génération de mot de mots-clés dans le module d'extraction.

On précise qu'un mot d'arrêt *(stopwords)* est un mot couramment utilisé que les moteurs de recherche sont programmés pour ignorer, à la fois lors de l'indexation des entrées pour la recherche et quand les récupérer à la suite d'une requête de recherche. Les termes de « *e-commerce »,* quant à eux, sont des termes qui apparaissent fréquemment sur les sites de « *e-commerce »* et qui ont vocation à faciliter l'activité commerciale. Il s'agit par exemple de mots tels que *« mon panier »,* « ajouter un article », « checkout », « payer », etc.

Il convient de noter que dans les cas (b) et (c), on évite les mots vides, les mots de « *e-commerce »,* et les chiffres ou nombres inintéressants. Un nombre sans intérêt est un nombre avec plus de trois chiffres qui ne représentent pas une année. Les mots contenus dans ces ensembles sont tous lemmatisés, normalisé et convertis sous forme minuscules. Par « normalisation », on entend suppression des caractères spéciaux (par exemple en français : é, á, etc.). Cela rend les comparaisons entre les chaines de caractères plus simples et plus rapides. Cependant, on génère également un dictionnaire de changements dans lequel à la fois la chaîne « normalisée » et la chaine originale sont conservées. Le dictionnaire est ensuite utilisé pour transformer les mots dans leurs formes appropriées, i.e. avec des caractères spécifiques, comme par exemple les caractères de la langue française.

En général, quatre grand ensembles de phrases sont générés : 1) pour l'ensemble du texte (cela permet de trouver par exemple la fréquence des mots) ; 2) pour le contenu du corps (cela permet par exemple de trouver les premières positions des mots) ; 3) pour le contenu du titre (cela permet d'avoir une approche différente pour le titre) ; 4) pour Meta contenu de description. Dans les différentes étapes mises en oeuvre par le module d'extraction de mot-clé, des ensembles différents sont utilisés.

Ainsi, on dispose, en sortie de ce module TEM, d'un dictionnaire des changements (DC) effectués dans le texte par rapport à la version d'origine, d'une lite des phrases lemmatisées (LLS), d'une liste de mots lemmatisés avec tags de parties de textes (POS) spécifiques (LW_POS) et d'une liste de verbes lemmatisés (LV). La liste des phrases lemmatisées (LLS) comprend : une liste de phrases du titre (TS), une liste de phrases du corps du texte (BS) et une liste de phrases de meta description (MDS).

*5.2.2. Module d'extraction de mots clés (KEM)*

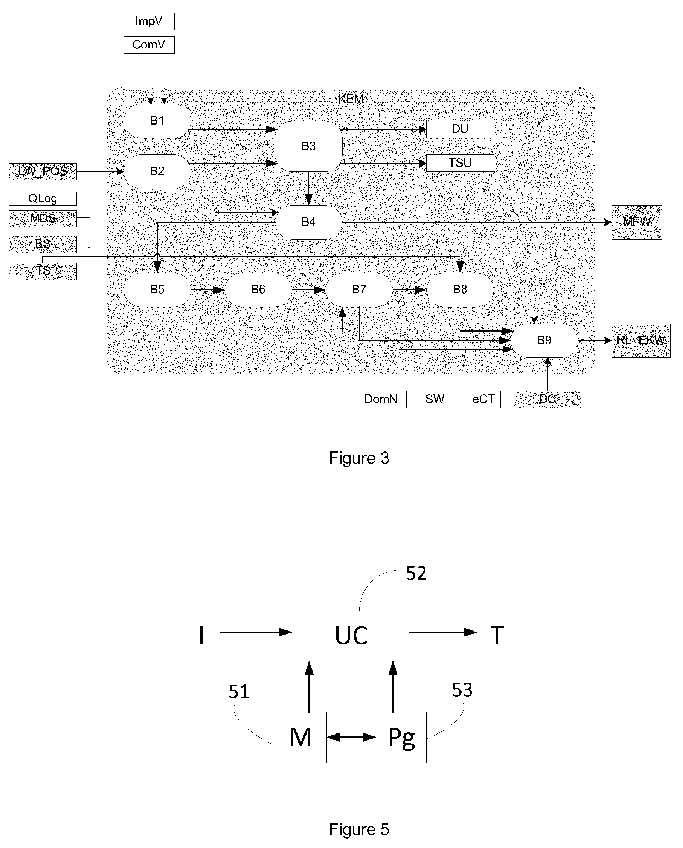

Dans ce mode de réalisation, on dispose d'un module KEM (logiciel ou matériel) qui peut mettre en oeuvre une méthode d'extraction de mots clés. Cette méthode d'extraction de mots clés est décrite en relation avec la figure 3, présentant l'architecture du module. Le module KEM comprend plusieurs sous modules, numérotés B1 à B11 :

- le module B1 est le module de sélection de verbes ; il prend en entrée la liste des verbes communs et la liste des verbes importants, pour fournir une liste de verbes sélectionnés en fonction du contexte ;
- le module B2 est le module de prétraitement sur la liste des mots uniques; il prend en entrée la liste de mots lemmatisés avec tags de parties de textes (POS) spécifiques (LW_POS) et fournit en sortie une liste de mots (nettoyée) comprenant une unique occurrence pour chaque mot ;

- le module B3 est le module de détection des unités; il prend en entrée le résultat des modules B1 et B2 et fournit en sortie des unités définies (DU) et des unités propres au contenu (TSU) ;
- le module B4 est le module de génération des vecteurs caractéristiques; il prend en entrée des résultats de requêtes de recherche (Qlog), les listes des phrases lemmatisées (TS, BS, MDS) et le résultat des modules B1 et B2 ; il fournit en sortie une liste de vecteurs caractéristiques ; il fournit également une liste des mots les plus fréquents (MFW).
- le module B5 est le module de calcul de score de chaque mot ; il prend en entrée la liste des vecteurs caractéristiques et fournit en sortie une liste de mots associés à des scores ;
- le module B6 est le module de sélection des mots les plus importants : il prend en entrée la liste des mots associés à leurs scores et sélectionne ceux dont le score est le plus élevé ; il fournit le résultat de cette sélection au module suivant ;
- le module B7 est le module de recherche des mots adjacents ;
- le module B8 est le module de recherche des mots voisins ;
- le module B9 est le module de filtrage des mots clés ; il fournit en sortie une liste de mots clés filtrés et triés et ordonnés selon leurs importance (RL_EKW) ;

La méthode d'extraction comprend les étapes suivantes, mises en oeuvre par les modules idoines, décrits précédemment :

- <u>Prétraitement sur la liste des mots unique :</u> La première étape dans l'extraction des mots-clés est d'avoir une liste de mots uniques appropriés ; Comme mentionné précédemment, dans le module d'extraction de texte, on génère une liste de mots avec des marqueurs spécifiques POS (catégorie grammaticale) ; cependant, parmi ces mots générés, certains ne sont pas prêt à être utilisés ; certains de ces mots peuvent encore contenir des caractères supplémentaires au début ou à la fin et ces caractères doivent être retirés ; Par exemple, « table* » doit être changé en « table » ; on effectue donc un nettoyage des mots et un regroupement sur les mots nettoyés (par exemple « table » et « table* » sont considérés, après nettoyage comme un seul mot : « table ») : les doublons sont donc supprimés ;
- <u>Sélection des verbes :</u> Dans l'approche de la technique proposée, les verbes ne sont pas des mots intéressants. Les seuls verbes intéressants sont les verbes les plus fréquemment utilisés dans le texte : il s'agit des verbes à conserver. Ils ont été placés, préalablement, dans la liste des verbes importants *(liste (b) de la lemmatisation des phrases).* Les verbes de cette liste sont ajoutés à la liste des mots simples générés précédemment pour former l'ensemble final des mots uniques pour la génération de mots clés.
- <u>Détection des Unités.</u> Il y a deux groupes d'unités définis dans l'approche proposée :

  - les unités définies, qui sont simplement des unités de mesure ; (unités métriques, unités de poids) tels que «cm», «kg», etc. ;
  - en fonction du texte, certains mots peuvent être considéré comme des unités ; par exemple; lorsque le texte « A » apparaît systématiquement accolé avec un chiffre, on considère que le motif « A » forme une unité spécifique.

- <u>Génération de vecteurs caractéristiques :</u> pour chaque mot unique généré de la liste des mots uniques, un vecteur de caractéristique est affecté ; chaque élément du vecteur est lié à une caractéristique du mot; dans ce mode de réalisation, les caractéristiques suivantes sont prises en compte :

  - fréquence : la fréquence d'un mot est le nombre d'occurrences d'un mot spécifique au sein de l'ensemble du texte ; on utilise une fréquence normalisée qui est représentative de la fréquence du mot divisée par la fréquence le plus élevée de tous les mots composants le texte ; la valeur maximale et le mot le plus fréquent obtenu dans cette étape sont utilisés dans d'autres étapes de la technique.
  - appartenance au titre : une balise de titre indique aux moteurs de recherche quel est le sujet d'une page particulière ; en outre, de nombreux titres contiennent des mots significatifs sur la page ; par conséquent, on utilise cette information pour bénéficier de mots importants qui apparaissent dans le titre ;
  - appartenance aux méta-descriptions : une balise « Meta » donne aux moteurs de recherche un résumé du contenu de la page ; par conséquent, en général, il contient les mots importants au sujet de la page ;
  - attribut d'affichage alternatif d'image : lorsqu'une image est utilisée et comprend un lien textuel alternatif (pour afficher ce lien en cas d'absence de l'image) ; un attribut d'affichage alternatif d'image est souvent précis et descriptif; par conséquent, il peut être une bonne source de mots importants ;
  - position de la première occurrence du mot : les premiers mots sont souvent des mots important, car ils sont lus en premier par l'utilisateur ; dès lors, la position de la première occurrence du mot est une caractéristique importante de ce mot.

- caractéristique de l'URL: en général, il est recommandé d'avoir des mots-clés dans les URL; les inventeurs ont donc supposé qu'un mot qui appartient à l'URL est un mot important qu'il est nécessaire de tagger ; cependant, les inventeurs ne considèrent que la dernière partie de l'URL, qui est apriori la partie la plus spécifique au produit ou service vendu.
- fréquence d'apparition du mot dans le journal de requête (Qlog) : le journal de requête d'un moteur de recherche reflète la répartition des mots-clés, les gens sont plus intéressés dans un journal de requête, est l'une des caractéristiques les plus importantes dans la recherche des mots-clés publicitaires sur les pages web ; cependant, l'approche utilisée par le module d'extraction est différente : pour obtenir cette valeur du vecteur de caractéristiques, on utilise une source externe qui permet de suivre les mots clés tapés par les utilisateurs dans le moteur (s) de recherche pour arriver sur le site ; en utilisant une seule source externe, on cible un seul moteur de recherche tandis que les journaux, dans certains cas de requête de plusieurs moteurs de recherche sont ciblés ; pour obtenir la fréquence de requêtes de chaque mot unique, on lemmatise les requêtes pour augmenter la précision de l'adéquation des mots. Pour chaque mot unique, nous augmentons la fréquence lorsqu'il apparaît dans une requête, soit sous la forme d'une requête simple (un mot dans la requête), ou sous la forme d'une requête composée (plusieurs mots dans la requête) ;

Ainsi, chaque mot du texte est défini sous la forme d'un vecteur multidimensionnel. En utilisant les valeurs définis par chaque vecteur, on définit un score global du mot au sein du texte.

En utilisant les caractéristiques mentionnées, nous attribuons une note à chaque mot unique dans le texte. Chaque score est obtenu par l'équation Score(V)=$a^2+b^2+c^2$, où « V » est un vecteur à trois caractéristiques « a », « b » et « c », soit de manière générique : $\sum_{i=1}^{i=n} x_i^2$ avec xi = élément du vecteur et n le nombre de dimensions du vecteur.

Chaque score montre l'importance du mot correspondant. Plus la valeur du score est importante, plus le mot est important. En utilisant les valeurs de score, il est donc possible de sélectionner les mots uniques les plus importants dans le texte.

- Sélection des mots uniques les plus importants : l'étape suivante consiste à effectuer une sélection des mots les plus importants ; Arbitrairement, les 10 mots dont le score est le plus élevé sont sélectionnés. Bien entendu, si le onzième mot a le même score que le dixième, on conserve l'ensemble des mots dont le score est égal au dixième. Par ailleurs, lorsque le nombre total des mots simples extraits est inférieur à dix, tous les mots sont sélectionnés. Parmi les mots uniques restant (i.e., les mots ne faisant pas partie des dix premiers scores), un mot est considéré comme un mot important si sa fréquence dans le corps du texte est supérieure à un seuil. Dans l'algorithme proposé, le seuil est calculé comme ci-dessous (équation 2) :

$$Importance\ threshold = \frac{\#sentences\ in\ body}{(maximum\ value\ of\ frequency)^2} \qquad (2)$$

- Recherche de mots adjacents : à partir de la listes des phrases extraites et des mots uniques sélectionnés, on identifie alors les mots adjacents dans le texte : deux mots sont considérés comme adjacents si ils apparaissent au moins une ou deux fois en tant que mots continus : un mot courant étant considéré comme adjacent à un mot suivant lorsque l'ensemble constitué du mot courant et du mot suivant apparaît au moins une (ou deux) fois dans ledit contenu textuel ; si les deux mots apparaissent de manière continu dans le titre, alors une seule occurrence est suffisante ; dans le corps du texte, deux occurrences sont nécessaire ; cependant, s'il existe une phrase dans laquelle les mots sont voisins, mais non adjacents, alors ils ne sont plus considérées comme adjacents (pour la détermination des mots voisins, voir l'étape suivante). Ainsi, lorsque deux mots « A » et « B » sont adjacents, un nouveau mot candidat «AB» est généré à condition qu'il ne constitue pas un mot appartenant à la liste des mots de e-commerce ou à la liste des « stop words » ; les mots « A » et « B » sont alors retirés de la liste des mots-clés de candidats. Il est à noter que lors de cette fusion des mots, deux mots ayant la même racine ne sont pas fusionnés.
Le score de ce nouveau mot candidat généré est obtenu en faisant une moyenne des scores des deux premiers mots ; par ailleurs, ayant la possibilité de générer à la fois «AB» et «BA» comme mots candidats, on conserve le couple dont la fréquence d'apparition est la plus élevée.
Par ailleurs, si le mot clé candidat est généré sous la forme de « Numéro + mot », on enregistre la correspondance entre le numéro et le mot. Cette correspondance est ensuite utilisée dans la dernière étape pour filtrer les mots-clés qui contiennent le numéro mais pas le mot correspondant.
Par ailleurs, cette approche est itérative : à partir de l'ensemble des mots candidats, avec la même approche, on identifie des éventuels mots adjacents supplémentaires. Il est à noter que dans cette phase, lors de la fusion « AB » et « BC », le double « B » doit être retiré et « ABC » doit être généré.

À l'issue de cette étape, on obtient une liste de mots candidats. Les mots candidats sont des mots dont la pertinence par rapport au contenu textuel est avérée. Le nombre de mots de cette liste de mots candidats est relativement limité, notamment du fait de cette identification d'adjacence. L'avantage de cette étape est de disposer de mots réellement représentatifs du contenu qui sont également contextualisés.

- Recherche de mots voisins : deux mots sont voisins s'ils apparaissent dans une même fenêtre de recherche, mais pas en tant que mots continu ; dans ce mode de réalisation proposé, une fenêtre représente deux mots séparés par au plus deux autre mots (ces autres mots n'étant pas des mots qui existent dans la liste de « stopwords ») ; à la suite de l'étape précédente de recherche d'adjacence, en utilisant la liste des mots candidats, on cherche à obtenir de nouveaux mots candidats en ciblant mots voisins ; lorsque deux mots sont voisins d'au moins deux fois, ils sont fusionnés pour générer un nouveau mot candidat. Le processus mis en oeuvre est le même que précédemment pour les mots adjacents, particulièrement pour ce qui est du titre et de la fusion de plusieurs mots voisins

    En outre, tous les termes de « e-commerce » générés sont filtrés. Les scores des nouveaux mots candidats générés sont également calculés comme pour les mots adjacents ;

    Les mots unique ayant servi à générer le nouveau mot candidat sont également supprimés de la liste des mots candidats si :

    ◦ Le mot initial est un mot unique ;
    ◦ La fréquence d'au moins un mot de l'ensemble des mots de départ est inférieure à un seuil :

$$Threshold = \frac{\#sentences\ in\ body}{maximum\ value\ of\ frequency}$$

    ◦ Si dans toutes les occurrences du mot initial, il apparaît comme un mot voisin d'un autre mot initial.

- Filtrage des mots candidats et génération de la liste de mots clés : finalement, à partir de la liste des mots candidats, un filtrage est fait de manière à ne conserver que les mots les plus pertinents est effectué ; le filtrage consiste principalement à supprimer un certain nombre de mots candidats en fonction de paramètres de suppression prédéterminés ; ce filtrage comprend par exemple :

    - la suppression des mots candidats uniques qui sont absents du titre ;
    - les mots candidats ne comprenant pas de lettre (suite de chiffres) ;
    - les mots faisant partie de la liste des « stopwords » ;
    - les mots comprenant soit des nombres, soit des unités, soit les deux (nombres et unités) (par exemple on conserve la phrase « poupée 42 cm » mais on ne conserve pas les phrases « poupée 42 », « poupée cm », « 42 cm »). ;
    - les noms de domaines DomN (au sens nom de domaine Internet) ;
    - les mots candidats comprenant plus de cinq mots simples (il est possible d'obtenir de tels mots à l'issue de la recherche des mots adjacents et de la recherche des mots voisins).

Les mots restants constituent alors la liste des mots clés qu'il convient de conserver. La dernière étape mise en oeuvre par ce module consiste à effectuer une transformation inverse des mots clés générés : les mots clés sont régénérés dans leurs formes appropriés en remplaçant les caractères génériques par les caractères spéciaux (par exemple les accents). Ceci est fait en utilisant le dictionnaire des changements générés dans le module d'extraction de texte.

C'est sur la base de cette liste que les traitements ultérieurs sont susceptibles d'être effectués. Dans de module suivant, de génération du titre, c'est le titre de la page Web elle-même qui est modifié à partir de cette liste de mots clés. Dans d'autres applications, d'autres traitements peuvent être mis en oeuvre. Ce qu'il convient de comprendre est que la procédure précédemment décrite est relativement générique (outre les traitements spécifiques au code source HTML). Elle peut dès lors être mise en oeuvre pour tout type de traitement.

*5.2.3. Module de traitement (TGM)*

Dans un mode de réalisation spécifique, qui est celui présenté ici, les mots clés extraits des contenus textuels (en l'occurrence des pages web à référencer) sont utilisés pour générer des titres de contenus. Plus particulièrement, dans ce mode de réalisation, les mots clés sont utilisés pour définir le contenu d'une balise de titre d'un contenu. Il peut par exemple s'agir de la balise *« <title></title>»* d'une page HTML. Il ne s'agit pas, dans le présent mode de réalisation de construire un titre au sens littéraire du terme. Une génération de titre littéraire est bien évidemment possible, mais il ne s'agit pas de l'objet de ce mode de réalisation.

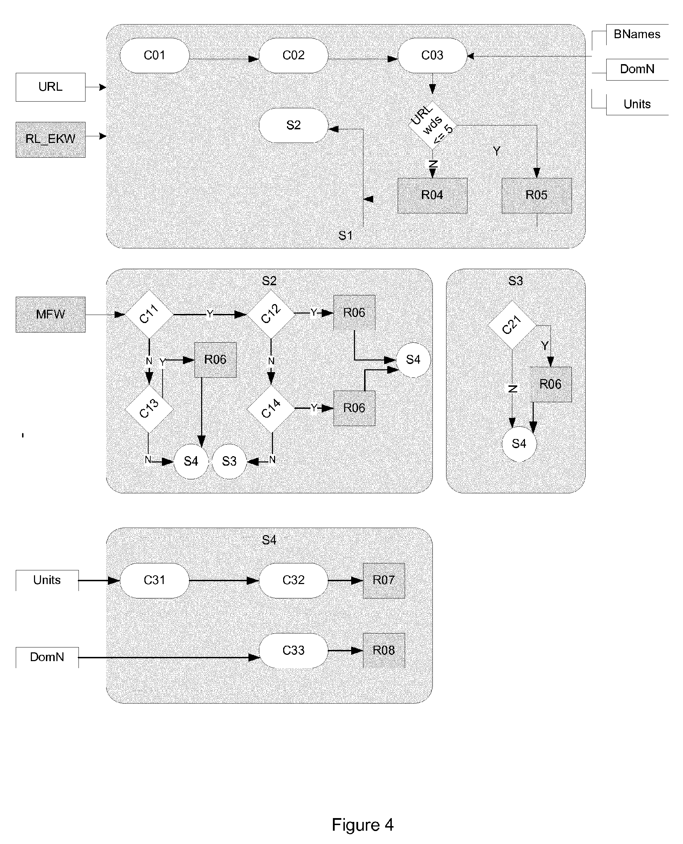

Une méthode de réalisation d'un titre selon la présente technique est décrite en relation avec la figure 4.

Une balise de titre indique aux moteurs de recherche le sujet d'une page. Il est généralement recommandé que chaque page possède un titre unique. En plus de l'utilité pour les moteurs de recherche, avoir un titre complet et pertinent est également bénéfique pour les utilisateurs eux-mêmes car il donne une vue d'ensemble sur le sujet d'une page Web. D'un point de vu procédural, il est important d'utiliser des mots-clés dans la balise titre « <title></title> » au moins une fois. Il est également recommandé de conserver un mot-clé le plus près possible du début de la balise de titre. Des résultats montrent également que lorsque l'objectif d'une page donnée est une sensibilisation à une marque dont elle fait la promotion, le nom de cette marque doit de manière préférentielle être placé dans le titre et de préférence au début de celui-ci. Ainsi, en utilisant ces prérequis et les mots clés extraits précédemment, le module génère un titre unique en mettant en oeuvre la méthode suivante, comprenant quatre étapes principales, dont la première est la plus importante :

- Étape 1 (S1 sur la figure 4) : la première étape consiste en l'extraction de tous les mots se situant à l'extrémité de l'URL de la page cible ; tous les mots extraits de l'URL sont ensuite lemmatisés afin de réaliser une comparaison plus précise ; en utilisant un dictionnaire de noms de marque, on identifie (lorsque cela est possible) un (ou plusieurs) nom de marque existante dans la chaîne extraite. Si un nom de marque est détecté, il est utilisé comme première partie du titre ; lorsqu'il y a plus d'un nom de marque, ils sont utilisés en tant que différentes parties du titre ; l'ordre des noms de marque correspond à l'ordre de leur apparition dans l'URL.

  Dans la chaîne de l'URL, on identifie également les structures de type « Numéro + unité » ; ces structures sont ensuite retirées de la chaîne d'URL et stockées pour être utilisé à l'étape 4. Il est à noter que si un certain nombre apparaît *sans* unité, il est tout simplement supprimé. La chaîne d'URL restante qui est exempte de noms de marque et de structure «Numéro + unité » est ensuite utilisée pour générer une autre partie du titre. Si le nombre de mots qui ne sont pas des « stopwords » dans la chaîne de l'URL est inférieur ou égale à un seuil, ce nombre de mots constitue une partie du titre. Toutefois, si ce nombre de mots dépasse le seuil, le meilleur mot-clé généré (dans la liste des mots clés générés) est utilisé comme la partie du titre. Dans ce mode de réalisation, le seuil est fixé à 5 (en option).
  Ainsi :

    - On effectue une extraction des mots de l'URL (C01);
    - On lemmatise les mots de l'URL (C02) ;
    - On exclue les noms de marques, les unités et les noms de domaine (C03)
    - On effectue un test comparatif du nombre de mots restant :

        ▪ S'il est supérieur à 5, on ne conserve que le meilleur mot clé comme deuxième partie du titre (R04) ;
        ▪ S'il est inférieur ou égal à 5, on conserve ces mots (R05) ;

- Étape 2 (S2, figure 4) : pour définir la partie suivante du titre, on vérifie si le mot le plus fréquent de la page existe dans la chaîne de l'URL d'origine. La chaîne d'origine est la chaine avant de lui retirer les noms de marque, des chiffres et les structures « nombre+ unité ». Si le mot le plus fréquent (de la liste des mots clés) n'existe pas dans l'URL, on recherche le mot-clé le plus important, avec le score le plus élevé, qui contient le mot le plus fréquent. À cette étape, nous ne prenons pas en compte le nombre de mots uniques dans les mots-clés. Par conséquent, il est possible d'ajouter un mot unique en tant que partie du titre. Si un tel mot existe, nous l'ajoutons au titre et on passe à l'étape 4.

  Si le mot le plus fréquent existe dans la chaîne URL d'origine, on recherche, au sein de la liste de mots clés générée, le mot-clé le plus important qui comprend à la fois le mot le plus fréquent et soit constitué de plus d'un mot unique n'appartenant pas à l'URL. Il convient de noter que dans cette étape tous les mots, y compris les mots vides, des chiffres et des unités sont comptabilisés. Si un tel mot existe, il est ajouté comme une partie du titre et on passe à l'étape 4. Si un tel mot n'existe pas, on recherche le meilleur mot-clé dans lequel tous les mots de l'URL apparaissent et qui contient un mot n'appartenant pas à l'URL. Si un tel mot existe, il est ajouté au titre et nous passons à l'étape 4. Sinon, l'étape 3 est utilisée pour générer une partie de titre.
  Ainsi :

    - Si les mots les plus fréquents sont dans l'URL (N à C11) ;

        ▪ S'il y a un mot clés qui est dans la liste des mots les plus fréquents (Y à C13) :

- • Le mot clés est ajouté au titre, et on se rend en S4 ;

  - ▪ Sinon (N à C13), on se rend en S4 ;

- - Si les mots les plus fréquents sont dans l'URL (Y à C11) ;

  - ▪ S'il y a un mot clés qui fait partie de la liste des mots les plus fréquents et qui soit constitué de plus d'un mot unique n'appartenant pas à l'URL (Y à C12), on ajoute ce mot en tant que titre (R06) et on va en S4 ;
  - ▪ Sinon (N à C12), on recherche le meilleur mot-clé dans lequel tous les mots de l'URL apparaissent et qui contient un mot n'appartenant pas à l'URL;

    - • S'il existe (Y à C14), on ajoute ce mot en tant que titre (R06) et on va en S4 ;
    - • Sinon (N à C14), on va en S3.

- - <u>Étape 3 (S3, figure 4)</u> : si aucune partie du titre n'est généré à l'étape 2, on exécute cette troisième étape consistant à obtenir le meilleur mot clé de la liste de mots clés généré, et dans lequel aucun mot de l'URL n'apparaît. Ainsi :

  - - On effectue une recherche pour déterminer s'il existe un mot clé composé qui ne comprend aucun élément de l'URL (C21) ;

    - ▪ Si oui, ce mot clé est ajouté au titre (R06) et on va en S4 ;
    - ▪ Si non, on va directement en S4.

- - <u>Étape 4 (S4 , figure 4)</u> : dans cette dernière étape mise en oeuvre dans le module, s'il y a une ou plusieurs unités extraites de l'étape 1, on ajoute cette unité à la fin du titre généré.
  À ce titre, il convient de mentionner que dans les étapes précédentes, tout en ajoutant des mots clés pour le titre, si l'URL originale contient des structures « Numéro + unité », ces structures sont supprimées afin d'éviter les doublons.
  La dernière étape consiste à ajouter le nom de domaine de l'URL pour le titre.
  Ainsi :

  - - On compare les unités de l'URL avec les parties de titre (C31) et on ajoute les unités manquantes par rapport à l'origine (C32) pour obtenir des unités à ajouter (R07);
  - - On ajoute (C33) le nom de domaine (R08).

L'ensemble des résultats (BNames, R4, R5, R6, R7, R8) sont concaténé pour former le titre.

<u>5.3. Dispositifs de mises en oeuvre.</u>

On décrit, en relation avec la figure 5, un dispositif de traitement comprenant des moyens permettant l'exécution du procédé décrit préalablement.

Par exemple, le dispositif de traitement comprend une mémoire 51 constituée d'une mémoire tampon, une unité de traitement 52, équipée par exemple d'un microprocesseur, et pilotée par le programme d'ordinateur 53, mettant en oeuvre les étapes nécessaires au traitement d'extraction de mots clé et de traitement de ces mots clés.

À l'initialisation, les instructions de code du programme d'ordinateur 53 sont par exemple chargées dans une mémoire avant d'être exécutées par le processeur de l'unité de traitement 52. L'unité de traitement 52 reçoit en entrée par exemple un ensemble de lexèmes initiaux ou des données de dictionnaires existants. Le microprocesseur de l'unité de traitement 52 met en oeuvre les étapes du procédé, selon les instructions du programme d'ordinateur 53 pour permettre l'obtention de mots clés et effectuer le traitement de ces mots clés.

Pour cela, le dispositif de traitement comprend, outre la mémoire tampon 51, des moyens d'obtention d'une information externe au dispositif, comme un ensemble de données accessibles en base ; ces moyens peuvent se présenter sous la forme d'un module d'accès à un réseau de communication tel qu'une carte réseau. Le dispositif comprend également des moyens de traitement, de ces données pour délivrer des données permettant le traitement des mots clés du contenu textuel ; ces moyens de traitement comprennent par exemple un processeur spécialisé dans cette tâche ; le dispositif comprend également un ou plusieurs moyens d'accès à une ou plusieurs bases de données. Le dispositif comprend également des moyens de mises à jour, notamment des moyens de pondération de relations entre les formes lexicales et/ou grammaticales composant le dictionnaire.

Ces moyens peuvent être pilotés par le processeur de l'unité de traitement 52 en fonction du programme d'ordinateur 53.

**Revendications**

1. Procédé d'extraction de mots clés d'un contenu textuel procédé mis en oeuvre par l'intermédiaire d'un dispositif électronique d'extraction comprenant au moins un module d'extraction de mots clés (KEM), procédé **caractérisé en ce qu'**il comprend les étapes suivantes :

   - obtention d'un contenu textuel à l'aide d'un module d'extraction textuel (TEM) ;
   - formatage du contenu textuel en fonction d'au moins un délimiteur, délivrant un contenu délimité comprenant un ensemble de phrases ;
   - lemmatisation de chaque phrase dudit contenu délimité délivrant un contenu lemmatisé ;
   - identification, au sein dudit contenu lemmatisé, d'un ensemble de mots uniques, délivrant une liste de mots candidats ;
   - regroupement des mots uniques de la liste des mots candidats délivrant une liste de mots clés.

2. Procédé d'extraction selon la revendication 1, **caractérisé en ce que** l'étape d'obtention d'un contenu textuel à l'aide d'un module d'extraction textuel (TEM) comprend :

   - une étape de récupération d'un code source HTML en provenance d'un contenu HTML accessible à partir d'une adresse de localisation uniforme (URL), délivrant un contenu HTML allégé au sein duquel un ensemble de balises prédéterminées a été supprimé ;
   - une étape d'extraction de contenu, à partir dudit contenu HTML allégé, délivrant un contenu à nettoyer, lequel contenu à nettoyer est obtenu en extrayant du contenu dans les trois balises « corps » et « titre » et « meta descrption » ;
   - une étape de nettoyage dudit contenu à nettoyer en fonction d'une liste de termes de commerce électronique (eCT) et d'une liste de mots d'arrêt (SW), délivrant un contenu textuel à formater.

3. Procédé d'extraction selon la revendication 1, **caractérisé en ce que** ladite étape de lemmatisation est suivie d'une étape de normalisation desdits mots dudit contenu et une étape de conversion desdits mots dudit contenu.

4. Procédé d'extraction selon la revendication 1, **caractérisé en ce que** l'étape d'identification, au sein dudit contenu lemmatisé, d'un ensemble de mots uniques, délivrant une liste de mots candidats comprend :

   - une étape de normalisation du contenu lemmatisé, comprenant une étape de nettoyage des mots et une étape de suppression de doublons, délivrant un ensemble de mots uniques ;
   - une étape de sélection, parmi les verbes dudit contenu textuel (ComV), d'un ensemble de verbes à conserver (ImpV), en fonction d'un dictionnaire de verbe à conserver, ledit ensemble de verbes à conserver étant ajouté audit ensemble de mots uniques ;
   - une étape de génération, pour chaque mot unique de l'ensemble des mots unique, d'un vecteur caractéristique ;
   - une étape de calcul, pour chaque mot unique de l'ensemble des mots unique, d'un score représentatif dudit vecteur caractéristique ;
   - une étape de sélection, parmi ledit ensemble de mots uniques, d'un sous ensemble de mots unique présentant les scores les plus élevés, ce sous ensemble de mots uniques constituant la liste des mots candidats.

5. Procédé selon la revendication 4, **caractérisé en ce que** ladite étape de génération d'un vecteur caractéristique d'un mot unique courant dudit ensemble de mots uniques tient compte d'au moins une fréquence d'apparition dudit mot unique courant dans un journal de requête.

6. Procédé d'extraction selon la revendication 1, **caractérisé en ce que** l'étape de regroupement des mots uniques de la liste des mots candidats délivrant une liste de mots clés comprend :

   - une étape de recherche, au sein de la liste des mots candidats, de mots adjacents, un mot courant étant considéré comme adjacent à un mot suivant lorsque l'ensemble constitué du mot courant et du mot suivant apparaît au moins deux fois dans ledit contenu textuel ou une seule fois dans le titre, ladite étape délivrant un liste de mots candidats dans laquelle le mot adjacent constitué du mot courant et du mot suivant est ajouté ;

- une étape de recherche, au sein de la liste des mots candidats, de mots voisins, un mot courant étant considéré comme voisin d'un mot suivant lorsqu'ils apparaissent tous les deux séparés consécutivement d'au plus deux autres mots qui ne sont pas des mots d'arrêt, ladite étape délivrant un liste de mots candidats dans laquelle le mot voisin constitué du mot courant et du mot suivant est ajouté ;
- une étape de filtrage des mots de ladite liste des mots candidats, comprenant une étape de suppression de mots candidats en fonction de paramètres de suppression prédéterminés, délivrant une liste de mots clés.

**7.** Procédé d'extraction selon la revendication 1, **caractérisé en ce qu'**il comprend en outre, postérieurement à ladite étape de regroupement, une étape de génération d'un titre dudit contenu textuel en fonction de ladite liste de mots clés.

**8.** Dispositif électronique d'extraction de mots clés d'un contenu textuel comprenant au moins un module d'extraction de mots clés (KEM),
Dispositif **caractérisé en ce qu'**il comprend les modules suivants :

- obtention d'un contenu textuel à l'aide d'un module d'extraction textuel (TEM) ;
- formatage du contenu textuel en fonction d'au moins un délimiteur, délivrant un contenu délimité comprenant un ensemble de phrases ;
- lemmatisation de chaque phrase dudit contenu délimité délivrant un contenu lemmatisé ;
- identification, au sein dudit contenu lemmatisé, d'un ensemble de mots uniques, délivrant une liste de mots candidats ;
- regroupement des mots uniques de la liste des mots candidats délivrant une liste de mots clés.

**9.** Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé d'extraction selon la revendication 1, lorsqu'il est exécuté sur un processeur.

Figure 1

Figure 2

Figure 3

Figure 5

Figure 4

Europäisches
Patentamt

European
Patent Office

Office européen
des brevets

**RAPPORT DE RECHERCHE EUROPEENNE**

Numéro de la demande

EP 16 17 9355

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2007/108728 A2 (JAJJA COMM AB [SE]; WENNLUND DANIEL [SE]) 27 septembre 2007 (2007-09-27) * page 8, lignes 23-30 * * page 7, step 235-7; page 11, line 21-31; page 13, line 4-11; page 13, line 4-11; page 16, line 23-30. * | 1-9 | INV. G06F17/21 G06F17/27 G06F17/30 G06Q30/02 |
| X | US 2015/106157 A1 (CHANG WALTER [US] ET AL) 16 avril 2015 (2015-04-16) * alinéas [0028], [0039], [0049], [0099] - [0116]; figure 12 * | 1-9 | |
| X | JIANYI LIU ET AL: "Advertising Keywords Extraction from Web Pages", 23 octobre 2010 (2010-10-23), WEB INFORMATION SYSTEMS AND MINING, SPRINGER BERLIN HEIDELBERG, BERLIN, HEIDELBERG, PAGE(S) 336 - 343, XP019154678, ISBN: 978-3-642-16514-6 * Sections 1 et 2 * | 1-9 | DOMAINES TECHNIQUES RECHERCHES (IPC) G06F G06Q |

Le présent rapport a été établi pour toutes les revendications

| Lieu de la recherche | Date d'achèvement de la recherche | Examinateur |
|---|---|---|
| Berlin | 1 décembre 2016 | Alt, Susanne |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&  : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 16 17 9355

01-12-2016

| Document brevet cité au rapport de recherche | Date de publication | Membre(s) de la famille de brevet(s) | Date de publication |
|---|---|---|---|
| WO 2007108728 A2 | 27-09-2007 | AUCUN | |
| US 2015106157 A1 | 16-04-2015 | AUCUN | |

EPO FORM P0460